# EUROPEAN PATENT APPLICATION

(11) **EP 4 730 500 A1**
(43) Date of publication of application: **22.04.2026**
(21) Application number: 24874953.3
(22) Date of filing: 02.10.2024
(51) Int. Cl.: H01M 50/171, H01M 50/107, H01M 50/213, H01M 50/249

(54) **BATTERY CELL, AND BATTERY PACK AND ELECTRIC TWO-WHEELED VEHICLE INCLUDING BATTERY CELL**

(30) Priority: 04.10.2023 KR 20230131972
(71) Applicant: LG Energy Solution, Ltd., Seoul 07335 (KR)
(72) Inventor: CHOI, Bo-Kyung, Daejeon 34122 (KR); KIM, Jung-Hoon, Daejeon 34122 (KR)
(74) Representative: Goddar, Heinz J.
(86) International application number: PCT/KR2024/015003
(87) International publication number: WO 2025/075397

(57) **Abstract**

The present disclosure relates to a battery cell that includes: an electrode assembly; a battery housing having an opening on one side and configured to accommodate the electrode assembly through the opening; a washer disposed in the opening of the battery housing; an exterior member configured to cover the battery housing and at least a portion of the washer; and an adhesive member provided on at least one side of the exterior member and configured to strengthen adhesive strength of the exterior member.

## Description

### TECHNICAL FIELD

The present disclosure relates to a battery cell, and a battery pack and an electric two-wheeled vehicle including the battery cell.

This application is based on and claims priority from Korean Patent Application No. 10-2023-0131972, filed on October 04, 2023, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

A battery pack may be configured by connecting a number of battery cells in series/parallel depending on the charge/discharge capacity of the battery pack required for the electric vehicle (EV) or hybrid electric vehicle (HEV). In this case, it is common to preferentially form a battery module including at least one battery cell and then add other components using at least one battery module, thereby configuring a battery pack or battery rack. Alternatively, a battery pack has recently been manufactured in a cell-to-pack type in which multiple battery cells are directly stored in a pack housing, instead of being modularized.

Meanwhile, an existing battery cell may include an exterior member on the outer side of the battery housing. If the battery cell is repeatedly exposed to high/low temperature conditions during a temperature cycle test, the exterior member may shrink due to the properties of the exterior member, which is configured as a film or the like, so that the top of the battery cell may be exposed. In this case, a short circuit is more likely to occur in a battery pack including a large number of battery cells.

In particular, in the case where a washer is provided on the top of the battery housing to supplement the electrical insulation, as the exterior member shrinks, the area of the washer covered by the exterior member gradually decreases, so that the washer may move to increase the risk of a short circuit occurring in the battery pack.

Therefore, there is a need to develop a battery cell capable of preventing the exterior member from shrinking so that the top of the battery cell is exposed even if the battery cell is repeatedly exposed to high/low temperature conditions.

In particular, it is necessary to develop a battery cell capable of increasing the adhesive force or frictional force between the washer and the exterior member to prevent the washer from moving, thereby suppressing a short circuit in the battery pack.

### DISCLOSURE

### Technical Problem

The present disclosure is designed to solve the problems of the related art, and therefore the present disclosure is directed to providing a battery cell capable of ensuring safety and reliability by preventing the upper part of the battery cell from being exposed even if the battery cell is repeatedly exposed to high/low temperature conditions.

In addition, the present disclosure is also to provide a battery pack including such a battery cell.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery cell including: an electrode assembly; a battery housing having an opening on one side and configured to accommodate the electrode assembly through the opening; a washer disposed in the opening of the battery housing; an exterior member configured to cover the battery housing and at least a portion of the washer; and an adhesive member provided on at least one side of the exterior member and configured to strengthen adhesive strength of the exterior member.

The adhesive member may be provided between the washer and the exterior member.

The washer may include a first portion to which the exterior member is adhered, and a second portion that is a remaining area, excluding the first portion, and the adhesive member may be provided only on the first portion.

The adhesive member may be provided on an outer surface of the exterior member.

The adhesive member may be configured as tape having an adhesive surface formed on one side thereof.

The adhesive member may be configured in the shape of a ring having a hole formed in the center thereof.

The battery housing may include a crimping portion configured to be bent inward in a radial direction of the electrode assembly from an upper circumference of the battery housing.

The washer may be disposed on the upper surface of the crimping portion.

According to another aspect of the present disclosure, there is provided a battery pack including a plurality of battery cells according to an embodiment of the present disclosure described above.

According to another aspect of the present disclosure, there is provided an electric two-wheeled vehicle including a battery pack according to an embodiment of the present disclosure described above.

According to another aspect of the present disclosure, there is provided a method for manufacturing such a battery cell.

According to the present disclosure, a method for manufacturing a battery cell including an electrode assembly, a battery housing having an opening on one side and configured to accommodate the electrode assembly, and a washer disposed in the opening of the battery housing may include: mounting the washer onto an upper surface of the battery housing; positioning an adhesive member on at least a portion of an outer surface of the washer; and wrapping around the battery housing with an exterior member so as to cover the battery housing and at least a portion of the washer.

The adhesive member may be configured as a liquid and applied to the outer surface of the washer.

The method may further include covering a portion of the washer before applying the adhesive member.

In another embodiment, the adhesive member may be configured as an adhesive surface provided on one surface of the washer.

In another embodiment, the adhesive member may be configured as an adhesive surface provided on one side of the exterior member.

According to the present disclosure, another method for manufacturing a battery cell including an electrode assembly, a battery housing having an opening on one side and configured to accommodate the electrode assembly, and a washer disposed in the opening of the battery housing may include: mounting the washer onto an upper surface of the battery housing; wrapping around the battery housing with an exterior member so as to cover the battery housing and at least a portion of the washer; and positioning an adhesive member on an outer edge of the exterior member.

Here, the adhesive member may be configured as tape having an adhesive surface formed on one side thereof.

The adhesive member may be configured in the shape of a ring having a hole formed in the center thereof.

### Advantageous Effects

According to one aspect of the present disclosure, even if the battery cell is repeatedly exposed to high/low temperature conditions, it is possible to prevent, using the adhesive member, the exterior member from shrinking so that the upper part of the battery cell is exposed. According to this aspect of the present disclosure, the safety and reliability of the battery cell can be secured.

According to another aspect of the present disclosure, multiple parts can be bonded to each other only through a simple process of applying a predetermined pressure in manufacturing a battery cell, thereby improving productivity.

In particular, according to another aspect of the present disclosure, the occurrence of a short circuit can be suppressed in a battery pack including multiple battery cells.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a battery cell according to an embodiment of the present disclosure.
FIG. 2 is a cross-sectional view of a battery cell according to an embodiment of the present disclosure.
FIG. 3 is a plan view of a battery cell according to an embodiment of the present disclosure.
FIG. 4 is a plan view of a battery cell of a comparative example in which an adhesive member is not provided, unlike a battery cell according to an embodiment of the present disclosure.
FIG. 5 is a cross-sectional view of a portion of a battery cell according to an embodiment of the present disclosure.
FIG. 6 is a drawing illustrating a manufacturing process of a battery cell according to an embodiment of the present disclosure.
FIG. 7 is a drawing illustrating another manufacturing process of a battery cell according to an embodiment of the present disclosure.
FIG. 8 is a drawing illustrating another manufacturing process of a battery cell according to an embodiment of the present disclosure.
FIG. 9 is a drawing illustrating another manufacturing process of a battery cell according to an embodiment of the present disclosure.
FIG. 10 is a cross-sectional view of a portion of a battery cell according to another embodiment of the present disclosure.
FIG. 11 is a drawing illustrating a manufacturing process of a battery cell according to another embodiment of the present disclosure.
FIG. 12 is a schematically perspective view of a battery pack including a battery cell according to an embodiment of the present disclosure.
FIG. 13 is a schematically perspective view of an electric two-wheeled vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back directions are used in this specification, it is obvious to those skilled in the art that these terms are only for convenience of explanation and may vary depending on the position of the target object or the position of the observer.

For convenience of explanation, the longitudinal direction of a winding axis of an electrode assembly wound in a jelly-roll type will be referred to as an axial direction in this specification. In addition, the direction surrounding the winding axis will be referred to as a circumferential direction. In addition, the direction approaching or moving away from the winding axis will be referred to as a radial direction.

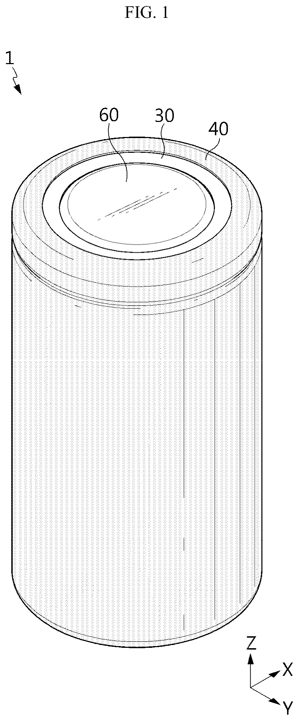

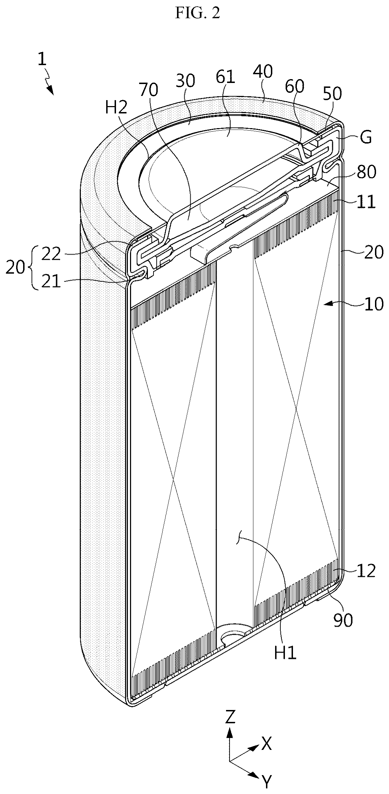

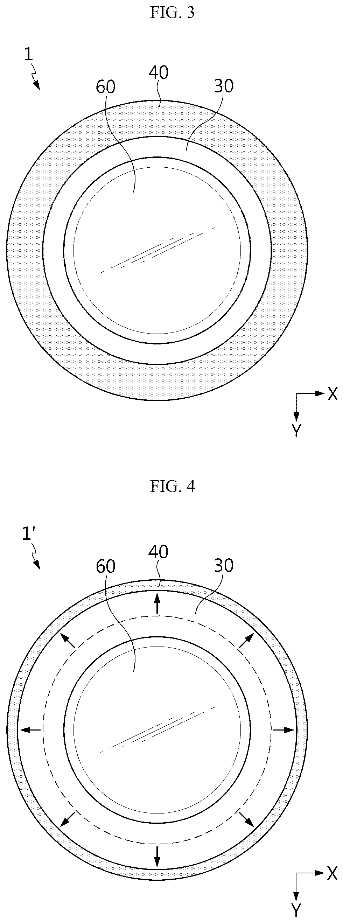

FIG. 1 is a perspective view of a battery cell according to an embodiment of the present disclosure, FIG. 2 is a cross-sectional view of a battery cell according to an embodiment of the present disclosure, and FIG. 3 is a plan view of a battery cell according to an embodiment of the present disclosure. In addition, FIG. 4 is a plan view of a battery cell of a comparative example in which an adhesive member is not provided, unlike a battery cell according to an embodiment of the present disclosure.

Referring to FIGS. 1 to 3, a battery cell 1 according to an embodiment of the present disclosure includes an electrode assembly 10, a battery housing 20, a washer 30, an exterior member 40, and an adhesive member 50. The battery cell 1 may be a cylindrical battery cell as illustrated.

Referring to FIG. 2, the electrode assembly 10 may be accommodated in the battery housing 20. The electrode assembly 10 may include a first electrode having a first polarity, a second electrode having a second polarity, and a separator interposed between the first electrode and the second electrode. The electrode assembly 10 may have a jelly-roll structure. That is, the electrode assembly 10 may be manufactured by winding a laminate, which is formed by stacking sheets of first and second electrodes at least once with a separator interposed therebetween, in one direction with respect to the axial direction passing through a winding hole H1. In this case, an additional separator may be provided on the outer surface of the electrode assembly 10 for insulation from the battery housing 20. Any jelly-roll structure known in the art may be applied to the present disclosure without limitation. The first electrode is a positive electrode or a negative electrode, and the second electrode is an electrode having a polarity opposite that of the first electrode.

The first electrode may include a first electrode current collector and a first electrode active material applied on one or both sides of the first electrode current collector. The first electrode may have an uncoated portion (first uncoated portion), on which the electrode active material is not applied, at the upper end thereof. That is, an uncoated portion (first uncoated portion) on which the first electrode active material is not applied may be provided at one end of the first electrode current collector in the width direction (the direction parallel to the Z-axis). The uncoated portion may function as a first electrode tab 11 by itself. The first electrode tab 11 may be provided at the top of the electrode assembly 10, accommodated in the battery housing 20, in the height direction (the direction parallel to the Z-axis). That is, the first electrode current collector may include a first uncoated portion, on which an active material layer is not formed so that the separator is exposed to the outside, at a long-side end, and at least a part of the first uncoated portion may be used as an electrode tab by itself. The first electrode tab 11 may be, for example, a positive electrode tab.

The second electrode may include a second electrode current collector and a second electrode active material applied on one or both sides of the second electrode current collector. The second electrode may have an uncoated portion (second uncoated portion), which is formed by not applying the electrode active material thereon, at the lower end thereof. That is, an uncoated portion on which the second electrode active material is not applied may be provided at the other end of the second electrode current collector in the width direction (the direction parallel to the Z-axis). The uncoated portion may function as a second electrode tab 12 by itself. The second electrode tab 12 may be provided at the bottom of the electrode assembly 10, accommodated in the battery housing 20, in the height direction (the direction parallel to the Z-axis). That is, the second electrode current collector may include a second uncoated portion, on which an active material layer is not formed so that the separator is exposed to the outside, at a long-side end, and at least a part of the second uncoated portion may be used as an electrode tab by itself. The second electrode tab 12 may be, for example, a negative electrode tab.

The first electrode tab 11 and the second electrode tab 12 may extend in the opposite directions along the height direction (the direction parallel to the Z-axis) of the battery cell 1. For example, as in the embodiment illustrated in FIG. 2, the first electrode tab 11 may extend toward an opening formed at the top of the battery housing 20, and the second electrode tab 12 may extend toward a closed portion formed at the bottom of the battery housing 20.

Referring to FIGS. 1 to 3, the battery housing 20 may be configured as a substantially cylindrical container. The battery housing 20 may have an opening on one side. The battery housing 20 may receive the electrode assembly 10 together with an electrolyte through the opening formed on one side. The side wall of the battery housing 20 and the closed portion formed on the opposite side of the opening may be formed integrally, or may be formed separately and then bonded to each other by welding or the like.

The battery housing 20 may be made of a conductive metal material. The battery housing 20 may be electrically connected to the second electrode tab 12 of the electrode assembly 10. Therefore, the battery housing 20 may have the same second polarity as the second electrode tab 12. The electrode assembly 10 and the battery housing 20 may be electrically connected through, for example, a second current collector 90.

Meanwhile, referring to FIGS. 1 to 3, the battery cell 1 according to an embodiment of the present disclosure may further include a top cap 60. The top cap 60 may cover the upper opening of the battery housing 20. The top cap 60 may be made of a conductive metal material. The top cap 60 may be electrically connected to the first electrode tab 11 of the electrode assembly 10 and configured to be electrically insulated from the battery housing 20. Therefore, the top cap 60 may have the same first polarity as the first electrode tab 11 of the electrode assembly 10, and may function as a first electrode terminal of the battery cell 1 of the present disclosure. The first electrode tab 11 and the top cap 60 may be electrically connected through, for example, a first current collector 80.

The top cap 60 may have a protrusion 61 formed to protrude upward from the approximate center thereof. The protrusion 61 may protrude through a washer hole H2 of the washer 30 further upward than the upper surface of the washer 30 so as to facilitate contact with electrical connection components such as a bus-bar. However, the present disclosure is not limited thereto, and the top cap 60 may be formed flat overall. In addition, even in the case where the top cap 60 has the protrusion 61, the upper surface of the protrusion 61 may be positioned at approximately the same height as the upper surface of the washer 30 or lower than that.

The battery housing 20 may include a beading portion 21. The beading portion 21 may be formed adjacent to the opening of the battery housing 20. The beading portion 21 may be formed by pressing the outer circumference of the battery housing 20. Accordingly, the beading portion 21 may be configured to be recessed to a predetermined depth in the radial direction from the outer surface of the battery housing 20, and may extend along the circumferential direction of the battery housing 20. The beading portion 21 is intended to prevent the electrode assembly 10 having a size corresponding to the width of the battery housing 20 from popping out through the upper opening of the battery housing 20, and may function as a support on which the top cap 60 is seated.

The battery housing 20 may include a crimping portion 22. The crimping portion 22 may be formed on the opening of the battery housing 20. The crimping portion 22 may be configured to bend inward in the radial direction of the electrode assembly 10 from the upper circumference of the battery housing 20. In the case where the battery housing 20 is provided with the beading portion 21, the crimping portion 22 may be formed above the beading portion 21. The crimping portion 22 may extend from the beading portion 21, and may be configured to extend and bend to surround an outer circumference and a portion of the upper surface of the top cap 60 disposed on the beading portion 21. The upper end of the crimping portion 22 may extend inward in the radial direction of the battery cell 1 by a predetermined distance so as to surround a portion of the upper surface of the top cap 60. Thus, the crimping portion 22 may fix the edge of the upper surface of the top cap 60. According to the above-implemented configuration of the present disclosure, the crimping portion 22 may fix the top cap 60 so as to prevent the top cap 60 from being separated upward.

Meanwhile, a gasket G may be interposed between the top cap 60 and the crimping portion 22 of the battery housing 20 to seal the upper opening of the battery housing 20 and to electrically insulate the battery housing 20 from the top cap 60. The gasket G may include a material having insulation and elasticity. The gasket G may include, for example, a polymer resin. The gasket G may be bent to correspond to the bent shape of the crimping portion 22 of the battery housing 20. In the case where the battery housing 20 has the beading portion 21, the gasket G may be interposed between the upper surface of the beading portion 21 and the upper end of the crimping portion 22.

In addition, the battery cell 1 according to an embodiment of the present disclosure may include a vent 70 for reducing internal pressure. The vent 70 may be configured as a thin plate of a conductive material. The vent 70 may have a downward recess formed in the central portion thereof, and a plurality of notches having different depths may be formed in the upper and lower bending portions of the central portion.

Although the structure of the battery cell 1 has been described in detail as an example, the present disclosure is not limited to the structure of the battery cell 1. The present disclosure provides a battery cell including an adhesive member and a manufacturing method thereof.

Referring to FIGS. 1 to 3, the washer 30 may be disposed in the opening of the battery housing 20. Specifically, the washer 30 may be seated on the upper end of the battery housing 20. In the case where the crimping portion 22 is formed at the upper end of the battery housing 20, the washer 30 may be seated on the upper surface of the crimping portion 22. The washer 30 may have, for example, a roughly disk shape having a hole formed at its center. That is, the washer 30 may have a roughly ring shape with a washer hole H2 formed at its center. The washer 30 may protect the battery cell 1 from external impact and supplement the mechanical strength of the components mounted on the top of the battery cell 1.

The washer 30 may be fixed to the top of the battery housing 20 in various ways. For example, the outer surface of the washer 30 may be fixed through a crimping process of the battery housing 20, or the outer surface of the washer 30 may be fixed using a heat-shrinkable tube shrinking when covering the outer surface of the battery housing 20 with the exterior member 40.

The washer 30 may be configured to be electrically insulated from the top cap 60 and the battery housing 20. The top cap 60 may be exposed through the washer hole H2 formed in the center of the washer 30, and the washer 30 and the top cap 60 may be spaced apart from each other. In the case where the top cap 60 has the protrusion 61, the protrusion 61 may be exposed through the washer hole H2.

According to the above-implemented configuration of the present disclosure, the washer 30 may play the role of supplementing the electrical insulation. Specifically, the washer 30 may prevent an internal short circuit from occurring when the top cap 60 as a first electrode terminal comes into contact with the battery housing 20 as a second electrode terminal.

The exterior member 40 may be configured to surround the outer surface of the battery cell 1. The exterior member 40 may be configured to cover the battery housing 20 and at least a portion of the washer 30. For example, the exterior member 40 may be configured to cover the side surface of the battery housing 20 and at least a portion of the upper surface of the washer 30. The exterior member 40 may be configured as a substantially square sheet to wrap around the outer surface of the battery housing 20 and seal the upper portion of the washer 30. The exterior member 40 may be configured to cover the lower surface of the battery housing 20. The exterior member 40 may be formed as a cylindrical heat-shrinkable tube, and the battery housing 20 may be inserted into the exterior member 40 so that the exterior member 40 wraps around the battery housing 20. Thus, the exterior member 40 may wrap around the outer surface of the battery housing 20 and the upper portion of the washer 30 and then seal the same by applying a predetermined amount of heat. The exterior member 40 may protect sub-parts of the battery cell 1 such as the battery housing 20.

Meanwhile, the battery cell 1 according to an embodiment of the present disclosure may include an adhesive member 50. The adhesive member 50 may be provided on at least one side of the exterior member 40. The adhesive member 50 may be configured to strengthen the adhesive force between the exterior member 40 and the washer 30. According to the above-implemented configuration of the present disclosure, the adhesive member 50 may be adhered to the exterior member 40, thereby fixing the position of the washer 30.

If, as in the comparative example illustrated in FIG. 4, an adhesive member is not provided on at least one side of the exterior member 40, the exterior member 40 may shrink due to repeated exposure of the battery cell 1' to high/low temperature conditions, so that the area of the washer 30 covered by the exterior member 40 may gradually decrease, whereas the area of the washer 30 exposed may gradually increase (see the directions of arrows). In this case, there is a risk that the washer 30 moves and causes a short circuit.

On the other hand, as in the embodiment illustrated in FIG. 3, if an adhesive member 50 is provided on at least one side of the exterior member 40, the adhesive force or frictional force between the washer 30 and the exterior member 40 may increase, so that the exterior member 40 may stably cover the washer 30, thereby ensuring the safety of the battery cell 1.

In addition, according to the above-implemented configuration of the present disclosure, since the washer 30 and the exterior member 40 may be bonded to each other with a simple process of applying a predetermined pressure due to the adhesive component of the adhesive member 50, it may be advantageous in terms of process efficiency.

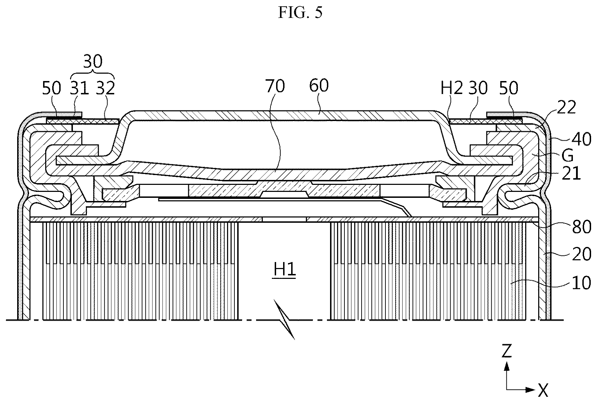

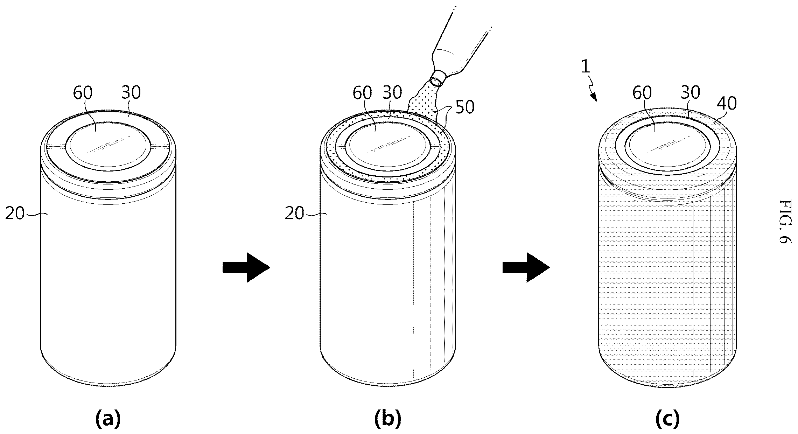

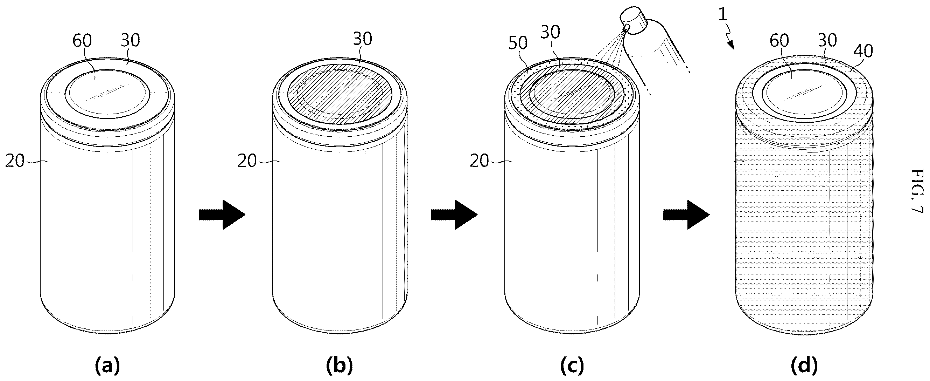

FIG. 5 is a cross-sectional view of a portion of a battery cell according to an embodiment of the present disclosure, FIG. 6 is a drawing illustrating a manufacturing process of a battery cell according to an embodiment of the present disclosure, and FIG. 7 is a drawing illustrating another manufacturing process of a battery cell according to an embodiment of the present disclosure.

According to an embodiment of the present disclosure, the adhesive member 50 may be provided between the washer 30 and the exterior member 40. That is, the adhesive member 50 may be provided on an inner surface of the exterior member 40. The adhesive member 50 may be provided on at least a portion of the washer 30. Specifically, the washer 30 may include a first portion 31 to which the exterior member 40 is adhered, and a second portion 32 corresponding to the remaining area excluding the first portion 31, and the adhesive member 50 may be provided only in the first portion 31. The first portion 31 may be provided along the outer circumference of the washer 30. In this case, the second portion 32 may include the protrusion 61 of the top cap 60. As a result, the protrusion 61, which serves as a first electrode, may not be covered by the exterior member 40.

Referring to FIG. 6, first, as shown in FIG. 6(a), the washer 30 may be mounted onto the opening of the battery housing 20, for example, onto the upper surface of the battery housing 20 in the illustrated example. Next, as shown in FIG. 6(b), the adhesive member 50 may be applied to at least a portion of the outer surface of the washer 30. In this case, the adhesive member 50 may include an adhesive in the form of a gel or liquid. Next, as shown in FIG. 6(c), the exterior member 40 may wrap around the battery housing 20 so as to cover the outer surface of the battery housing 20 and at least a portion of the washer 30. In this state, a predetermined amount of heat may be applied to the exterior member 40, so that the exterior member 40 may be adhered to the battery housing 20 and the washer 30 by the adhesive member 50.

According to the above-implemented configuration of the present disclosure, even if the battery cell 1 is repeatedly exposed to high/low temperatures so that the exterior member 40 shrinks, the exterior member 40 may be prevented from being peeled off by the adhesive member 50, thereby preventing the washer 30 from being exposed to the outside. As a result, the risk of a short circuit may be prevented, and the safety of the battery cell 1 may be secured.

Meanwhile, according to an embodiment of the present disclosure, the adhesive member 50 may be configured as a liquid and then applied to the outer surface of the washer 30. Specifically, referring to FIG. 7, first, as shown in FIG. 7(a), the washer 30 may be mounted onto the opening of the battery housing 20, for example, onto the upper surface of the battery housing 20. Next, as shown in FIG. 7(b), a portion of the washer 30 may be covered before applying the adhesive member 50. The covered portion is hatched in the drawing. That is, the second portion 32 of the washer 30 to which the exterior member 40 is not adhered may be covered.

Then, as shown in FIG. 7(c), the adhesive member 50 may be applied to the washer 30. In this case, the adhesive member 50 may be applied to the washer 30 using a spray or the like. Even if the adhesive member 50 is evenly applied while covering the second portion 32, the adhesive member 50 may be applied only to the first portion 31, so the application process is easy, and the adhesive member 50 may be prevented from being applied to a portion of the top cap 60 functioning as the first electrode terminal.

Next, as shown in FIG. 7(d), the exterior member 40 may wrap around the battery housing 20 so as to cover the outer surface of the battery housing 20 and at least a portion of the washer 30.

According to the above-implemented configuration of the present disclosure, the adhesive member 50 may be absolutely prevented from being applied to a portion of the top cap 60 that functions as the first electrode terminal. In addition, when the adhesive member 50 configured as a liquid is applied, it may be quickly applied to a wide area, thereby reducing time and cost for the manufacturing process and improving productivity.

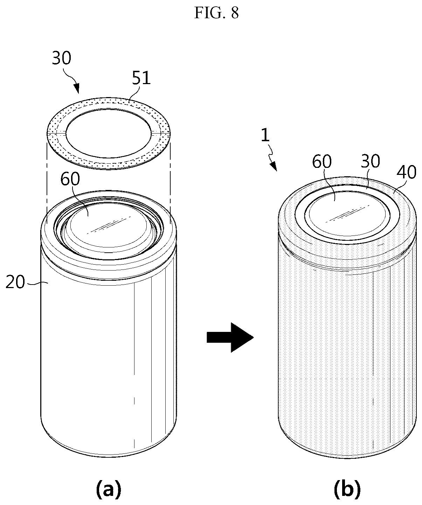

FIG. 8 is a drawing illustrating another manufacturing process of a battery cell according to an embodiment of the present disclosure.

According to an embodiment of the present disclosure, an adhesive surface 51 may be provided on one side of the washer 30. The adhesive surface 51 may be provided on the first portion 31. The adhesive surface 51 may be one surface of double-sided tape. Thus, as shown in FIG. 8(a), the washer 30 having the adhesive surface 51 may be mounted onto the opening of the battery housing 20, for example, onto the upper surface thereof. Then, as shown in FIG. 8(b), the exterior member 40 may wrap around the battery housing 20 so as to cover the outer surface of the battery housing 20 and at least a portion of the washer 30. In this state, a predetermined amount of heat may be applied to the exterior member 40, so that the adhesive surface 51 and the exterior member 40 may be bonded, and the exterior member 40 may be bonded to the battery housing 20 and the washer 30.

That is, in the present embodiment in which the battery cell 1 is manufactured in the order of mounting the washer 30 on the upper surface of the battery housing 20, positioning the adhesive member 50 on at least a portion of the outer surface of the washer 30, and wrapping the battery housing 20 with the exterior member 40 so as to cover the battery housing 20 and at least a portion of the washer 30, the adhesive member 50 may be provided as an adhesive surface 51 on one surface of the washer 30. In the present embodiment, the adhesive surface 51 of the washer 30 acts as the adhesive member 50, and in particular, in this case, the process of applying the liquid-type adhesive member to the battery housing 20 and the washer 30, described with reference to FIGS. 6 and 7, may be omitted, thereby reducing time and cost in the manufacturing process and improving productivity.

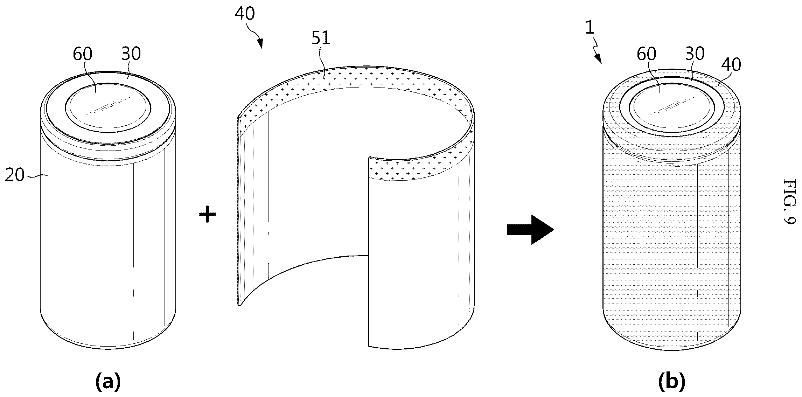

FIG. 9 is a drawing illustrating another manufacturing process of a battery cell according to an embodiment of the present disclosure.

According to an embodiment of the present disclosure, an adhesive surface 51 may be provided on one side of the exterior member 40. The adhesive surface 51 may be provided on the inner surface of the exterior member 40. The adhesive surface 51 may be provided on a portion of the exterior member 40 that covers the upper surface of the washer 30. The adhesive surface 51 may be one surface of double-sided tape. Accordingly, after the washer 30 is mounted onto the upper surface of the battery housing 20 as shown in FIG. 9(a), and the exterior member 40 provided with the adhesive surface 51 may be adhered to the battery housing 20 so as to cover the battery housing 20 and at least a portion of the washer 30 as shown in FIG. 9(b).

That is, in the present embodiment in which the battery cell 1 is manufactured in the order of mounting the washer 30 onto the upper surface of the battery housing 20, positioning the adhesive member 50 on at least a portion of the outer surface of the washer 30, and wrapping the battery housing 20 with the exterior member 40 so as to cover the battery housing 20 and at least a portion of the washer 30, the adhesive member 50 may be provided as the adhesive surface 51 provided on one surface of the exterior member 40. In the present embodiment, the adhesive surface 51 of the exterior member 40 acts as the adhesive member 50, and in particular, in this case, the process of applying the liquid-type adhesive member to the battery housing 20 and the washer 30 described with reference to FIGS. 6 and 7 may be omitted, thereby reducing time and cost in the manufacturing process and improving productivity.

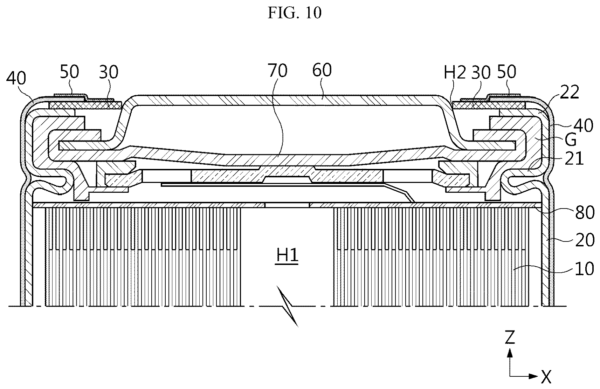

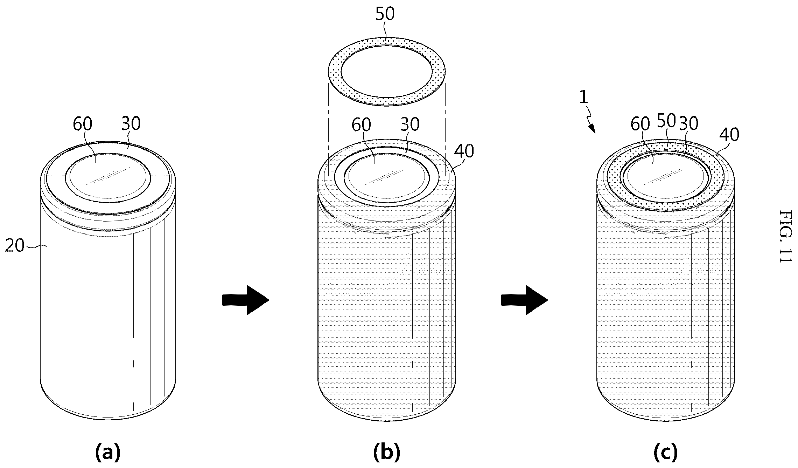

FIG. 10 is a cross-sectional view of a portion of a battery cell according to another embodiment of the present disclosure, and FIG. 11 is a drawing illustrating a manufacturing process of a battery cell according to another embodiment of the present disclosure

According to another embodiment of the present disclosure, an adhesive member 50 may be provided on the outer surface of the exterior member 40. Referring to FIG. 10, an adhesive member 50 may be provided on the upper surfaces of the exterior member 40 and washer 30. The adhesive member 50 may be provided along the circumference of a portion where the exterior member 40 covers the washer 30.

Specifically, the adhesive member 50 may be configured as tape having an adhesive surface formed on one surface. In addition, the adhesive member 50 may be formed in the shape of a ring with a hole formed in the center. The adhesive member 50 may be configured to cover the remaining portion, excluding the protrusion 61 of the top cap 60. The inner diameter of the hole of the adhesive member 50 may be configured to correspond to the outer diameter of the protrusion 61.

A method of manufacturing such a battery cell 1 may be as follows.

Specifically, first, as shown in FIG. 11(a), a washer 30 may be mounted onto the upper surface of the battery housing 20. Next, as shown in FIG. 11(b), an exterior member 40 may wrap around the battery housing 20 so as to cover the outer surface of the battery housing 20 and at least a portion of the washer 30. Then, as shown in FIG. 11(c), an adhesive member 50 may be positioned on the outer edge of the exterior member 40. In this case, as described in the embodiment above, the adhesive member 50 may be configured as tape having an adhesive surface formed on surface, and may be adhered to the outer edge of the exterior member 40 and a portion of the washer 30.

According to the above-implemented configuration of the present disclosure, the force of the adhesive member 50 pulling the exterior member 40 acts in the opposite direction to the force of the exterior member 40 to contract, thereby holding the exterior member 40. Therefore, the exterior member 40 may be prevented from contracting due to its physical properties. In addition, since the adhesive member 50 is able to fix the washer 30, the washer 30 may be prevented from moving and causing a short circuit.

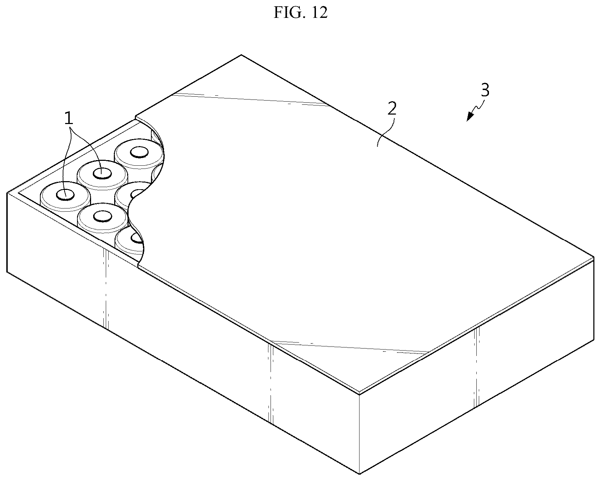

FIG. 12 is a schematically perspective view of a battery pack including a battery cell according to an embodiment of the present disclosure.

Referring to FIG. 12, a battery pack 3 according to an embodiment of the present disclosure may include a battery cell assembly in which a plurality of battery cells 1 according to an embodiment of the present disclosure described above are electrically connected, and a pack housing 2 that accommodates the battery cell assembly. The plurality of battery cells 1 may be accommodated inside the pack housing 2 such that the opening of the battery housing 20 faces upward.

Meanwhile, although the battery pack 3 according to an embodiment of the present disclosure may further include components such as a bus-bar for electrical connection, a cooling unit, and a power terminal, they have been omitted from the drawing for convenience of illustration.

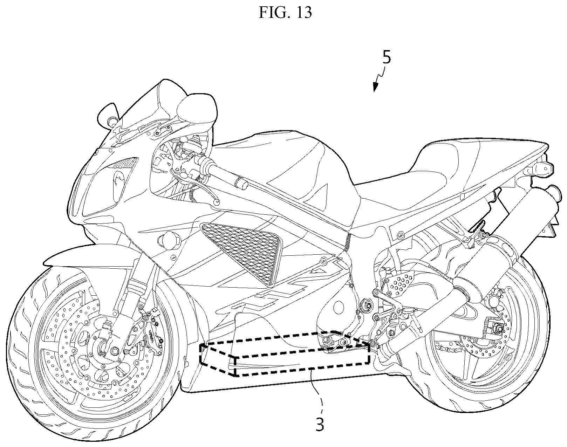

FIG. 13 is a schematically perspective view of an electric two-wheeled vehicle including a battery pack according to an embodiment of the present disclosure.

Referring to FIG. 13, an electric two-wheeled vehicle 5 according to an embodiment of the present disclosure includes the battery pack 3 of the present disclosure described above. The electric two-wheeled vehicle 5 operates by receiving power from the battery pack 3 of the present disclosure. The electric two-wheeled vehicle 5 may be a two-wheeled vehicle that operates only by power supply from the battery pack 3, or may be a hybrid two-wheeled vehicle that operates by other energy sources such as fuel and power supply. The electric two-wheeled vehicle 5 includes, for example, an electric scooter, an electric bicycle, or the like.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery cell comprising:
an electrode assembly;
a battery housing having an opening on one side and configured to accommodate the electrode assembly through the opening;
a washer disposed in the opening of the battery housing;
an exterior member configured to cover the battery housing and at least a portion of the washer; and
an adhesive member provided on at least one side of the exterior member and configured to strengthen adhesive strength of the exterior member.

2. The battery cell according to claim 1,
wherein the adhesive member is provided between the washer and the exterior member.

3. The battery cell according to claim 2,
wherein the washer comprises
a first portion to which the exterior member is adhered, and
a second portion that is a remaining area, excluding the first portion, and
wherein the adhesive member is provided only on the first portion.

4. The battery cell according to claim 1,
wherein the adhesive member is provided on an outer side of the exterior member.

5. The battery cell according to claim 4,
wherein the adhesive member is configured as tape having an adhesive surface formed on one side thereof.

6. The battery cell according to claim 4,
wherein the adhesive member is configured in a shape of a ring having a hole formed in a center thereof.

7. The battery cell according to claim 1,
wherein the battery housing comprises a crimping portion configured to be bent inward in a radial direction of the electrode assembly from an upper circumference of the battery housing.

8. The battery cell according to claim 7,
wherein the washer is disposed on an upper surface of the crimping portion.

9. A battery pack comprising a plurality of battery cells according to any one of claims 1 to 8.

10. An electric two-wheeled vehicle comprising a battery pack according to claim 9.

11. A method for manufacturing a battery cell comprising an electrode assembly, a battery housing having an opening on one side and configured to accommodate the electrode assembly, and a washer disposed in the opening of the battery housing, the method comprising:
mounting the washer onto an upper surface of the battery housing;
positioning an adhesive member on at least a portion of an outer surface of the washer; and
wrapping around the battery housing with an exterior member so as to cover the battery housing and at least a portion of the washer.

12. The method for manufacturing a battery cell according to claim 11,
wherein the adhesive member is configured as a liquid and is applied to the outer surface of the washer.

13. The method for manufacturing a battery cell according to claim 12,
further comprising covering a portion of the washer before applying the adhesive member.

14. The method for manufacturing a battery cell according to claim 11,
wherein the adhesive member is configured as an adhesive surface provided on one surface of the washer.

15. The method for manufacturing a battery cell according to claim 11,
wherein the adhesive member is configured as an adhesive surface provided on one side of the exterior member.

16. A method for manufacturing a battery cell comprising an electrode assembly, a battery housing having an opening on one side and configured to accommodate the electrode assembly, and a washer disposed in the opening of the battery housing, the method comprising:
mounting the washer onto an upper surface of the battery housing;
wrapping around the battery housing with an exterior member so as to cover the battery housing and at least a portion of the washer; and
positioning an adhesive member on an outer edge of the exterior member.

17. The method for manufacturing a battery cell according to claim 16,
wherein the adhesive member is configured as tape having an adhesive surface formed on one side thereof.

18. The method for manufacturing a battery cell according to claim 16,
wherein the adhesive member is configured in a shape of a ring having a hole formed in a center thereof.
